# EUROPEAN PATENT APPLICATION

(11) **EP 4 718 613 A1**
(43) Date of publication of application: **01.04.2026**
(21) Application number: 24886174.2
(22) Date of filing: 28.10.2024
(51) Int. Cl.: H01M 50/383, H01M 50/317, H01M 10/42

(54) **BATTERY PACK**

(30) Priority: 02.11.2023 KR 20230149598
(71) Applicant: LG Energy Solution, Ltd., Seoul 07335 (KR)
(72) Inventor: SHIN, Ju Hwan, Daejeon 34122 (KR); LEE, Hyoung Suk, Daejeon 34122 (KR)
(74) Representative: Plasseraud IP
(86) International application number: PCT/KR2024/016530
(87) International publication number: WO 2025/095500

(57) **Abstract**

Example embodiments provide a battery pack. The battery pack includes: a pack housing including plates and a side wall; first and second battery cell assemblies on the plates; first and second exhaust devices coupled to the side wall, in which the first exhaust device is closer to the first battery cell assembly than the second exhaust device and the second exhaust device is closer to the second battery cell assembly than the first exhaust device; a first forced exhaust motor configured to open the first exhaust device; and a second forced exhaust motor configured to open the second exhaust device.

## Description

### [Technical Field]

The present invention relates to a battery pack. The present application claims the benefit of priority based on Korean Patent Application No. 10-2023-0149598, filed on November 2, 2023, and the entire contents of the Korean patent application is incorporated herein by reference.

### [Background Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A trend in the development of technology for secondary batteries for mobility is an improvement in energy density and safety. The safety of secondary batteries for mobility is directly related to passengers' lives and thus is very important. The safety of secondary batteries may be achieved through mechanical robustness, reliability of electrical insulation, and heat transfer delay when a thermal runaway event occurs.

### [Disclosure]

### [Technical Problem]

The present invention is directed to providing a battery pack with improved safety.

### [Technical Solution]

Example embodiments of the present invention provide a battery pack. The battery pack includes: a pack housing including plates and a side wall; first and second battery cell assemblies on the plates; first and second exhaust devices coupled to the side wall, in which the first exhaust device is closer to the first battery cell assembly than the second exhaust device and the second exhaust device is closer to the second battery cell assembly than the first exhaust device; a first forced exhaust motor configured to open the first exhaust device; and a second forced exhaust motor configured to open the second exhaust device.

The battery pack may further include a battery management system (BMS) configured to control the first and second forced exhaust motors.

The BMS may be configured to determine whether a thermal runaway event occurs in the pack housing and a location of the thermal runaway event.

The BMS may be configured to control the first and second forced exhaust motors based on the location of the thermal runaway event.

When a thermal runaway event occurs in the first battery cell assembly, the BMS may be configured to operate the first forced exhaust motor to open the first exhaust device.

When a thermal runaway event occurs in the first battery cell assembly, the BMS may prevent operation of the second forced exhaust motor.

Example embodiments provide a battery pack. The battery pack includes a pack housing including a plurality of plates and first and second side walls, first to fourth battery cell assemblies on the base plate, a battery management system (BMS) configured to monitor the first to fourth battery cell assemblies, first and second exhaust devices coupled to the first side wall, third and fourth exhaust devices coupled to the second side wall, first and second forced exhaust motors between the first and second battery cell assemblies and the first side wall, and third and fourth forced exhaust motors between the third and fourth battery cell assemblies and the second side wall.

The first forced exhaust motor may be configured to open the first exhaust device, the second forced exhaust motor may be configured to open the second exhaust device, the third forced exhaust motor may be configured to open the third exhaust device, and the fourth forced exhaust motor may be configured to open the fourth exhaust device.

The BMS may be configured to determine a location of a thermal runaway event in the pack housing.

The BMS may be configured to control the first to fourth forced exhaust motors based on the location of the thermal runaway event.

The BMS may be configured to control the first to fourth forced exhaust motors to open an exhaust device closest to the location of the thermal runaway event among the first to fourth exhaust devices.

The BMS may be configured to control the first to fourth forced exhaust motors to open only an exhaust device closest to the location of the thermal runaway event among the first to fourth exhaust devices.

### [Advantageous Effects]

According to example embodiments of the present invention, when a thermal runaway event occurs in a battery pack, only some of exhaust devices can be opened based on the location of the thermal runaway event. Accordingly, the propagation of the thermal runaway event to an adjacent battery cell assembly due to flames and a high-temperature gas generated in a battery cell assembly can be prevented, and the safety of the battery pack can be improved.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a plan view of a battery pack according to example embodiments.
FIG. 2 is a cross-sectional view taken along line 1I-1I' of FIG. 1.
FIG. 3 is a flowchart of an operation of a battery pack according to example embodiments.
FIG. 4 is a plan view for describing an operation of a battery pack according to example embodiments.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

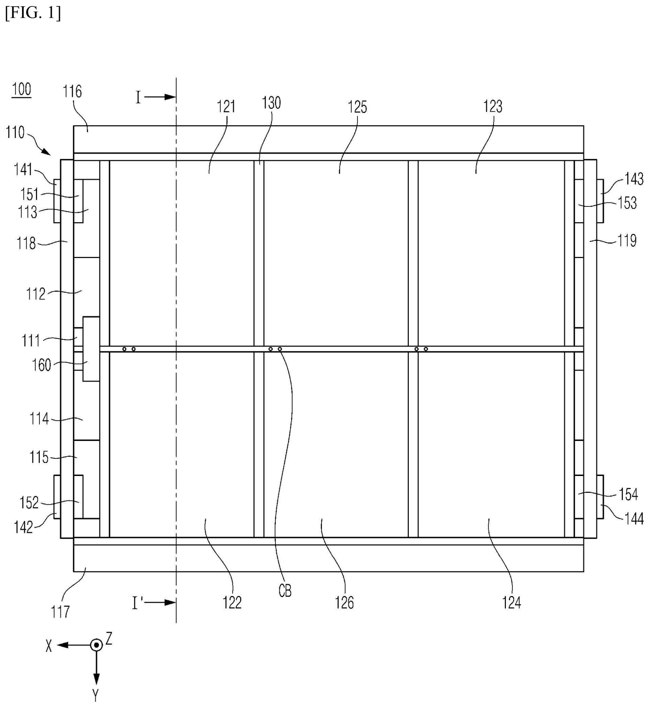

FIG. 1 is a plan view of a battery pack 100 according to example embodiments.

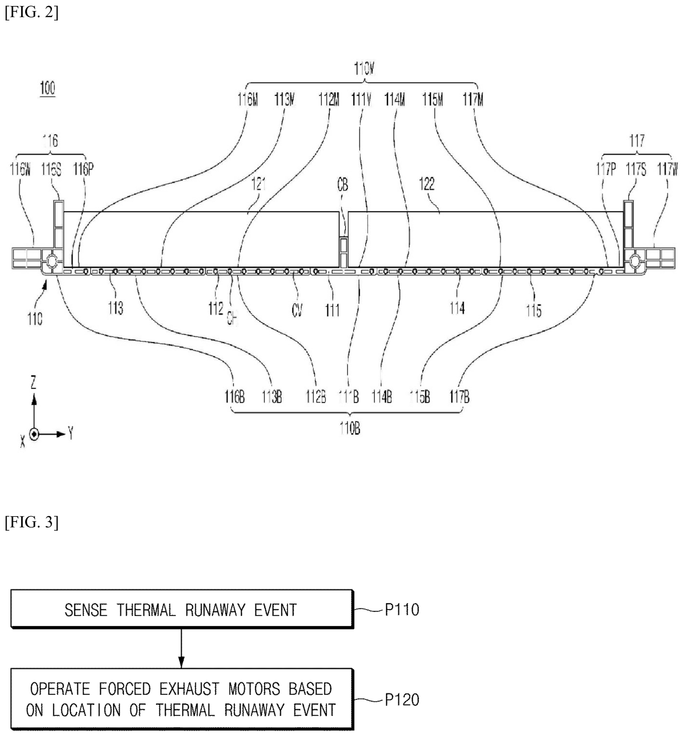

FIG. 2 is a cross-sectional view taken along line 1I-1I' of FIG. 1.

Referring to FIGS. 1 and 2, the battery pack 100 may include a pack housing 110, a plurality of battery cell assemblies 121, 122, 123, 124, 125 and 126, cross beams 130, a plurality of exhaust devices 141, 142, 143 and 144, a plurality of motors 151, 152, 153 and154, and a battery management system (BMS) 160. The battery pack 100 may be a final product to be mounted in an application such as a vehicle.

The pack housing 110 may provide a space for mounting the battery cell assemblies 120 therein. The pack housing 110 may include plates 111, 112, 113, 114 and 115 and side walls 116, 117, 118 and 119.

The battery cell assemblies 120 may be on a mounting surface 110M of the pack housing 110. Two directions substantially parallel to the mounting surface 110M of the pack housing 110 are defined as an X-axis direction and a Y-axis direction, and a direction substantially perpendicular to the mounting surface 110M of the pack housing 110 is defined as a Z-axis direction. The X-axis direction, the Y-axis direction, and the Z-axis direction may be substantially perpendicular to one another. Unless otherwise mentioned, the definition of the directions will apply to the following drawings. The X-axis direction and the Y-axis direction may be referred to as horizontal directions, and the Z-axis direction may be referred to as a vertical direction.

Each of the plates 111, 112, 113, 114 and 115 and the side walls 116 and 117 may be provided by an extrusion process. An extrusion direction of each of the plates 111, 112, 113, 114 and 115 and the side walls 116 and 117 may be the X-axis direction. The plates 111, 112, 113, 114 and 115 and the side walls 116 and 117 may be arranged in the Y-axis direction. The side walls 118 and 119 may also be provided by the extrusion process.

FIG. 1 illustrates the pack housing 110 including the five plates 111, 112, 113, 114 and 115 between the side walls 116 and 117 but should be understood only as a non-limiting example and does not limit the technical idea of the present invention in any sense. The number of the plates 111, 112, 113, 114 and 115 may vary according to the design of the battery pack 100 that is finally manufactured.

The plate 111 may be interposed between the plates 112 and 114. The plate 112 may be interposed between the plates 111 and 113. The plate 113 may be interposed between the plate 112 and the side wall 116. The plate 114 may be interposed between the plates 111 and 115. The plate 115 may be interposed between the plate 114 and the side wall 117.

Neighboring ones among the plates 111, 112, 113, 114 and 115 and the side walls 116 and 117 may be coupled to each other. Neighboring ones among the plates 111, 112, 113, 114 and 115 and the side walls 116 and 117 may be welded to each other.

The plate 111 may be welded to the plates 112 and 114. The plate 112 may be welded to the plates 111 and 113. The plate 113 may be welded to the plate 112 and the side wall 116. The plate 114 may be welded to the plates 111 and 115. The plate 115 may be welded to the plate 114 and the side wall 117.

According to example embodiments, the plates 111, 112, 113, 114 and 115 and the side walls 116 and 117 may be coupled by friction stir welding. Friction stir welding (FSW) may include processing materials to be joined (i.e., the plates 111, 112, 113, 114 and 115 and the side walls 116 and 117) with a non-consumable tool (generally, including a probe) that rotates at high speeds. Frictional heat is generated between the tool and the materials to be joined and thus the materials to be joined around the tool are softened by the frictional heat. Materials on opposite sides of a bonding surface may be mixed by plastic flow of the materials to be joined that are stirred and softened by the tool, thus causing the materials to be joined to be combined with each other. The side walls 118 and 119 may be coupled to the plates 111, 112, 113, 114 and 115 by a method such as friction stir welding or the like.

During friction stir welding, the materials to be joined undergo intensive plastic deformation at high temperatures. A result of friction stir welding may include a microstructure with features of a defined equiaxed grain and have improved mechanical characteristics. As the result of friction stir welding, the pack housing 110 may include a welding bead.

Technicians of ordinary skill in the art will be able to easily derive embodiments in which the plates 111, 112, 113, 114 and 115 and the side walls 116 and 117 are combined by arc welding, e.g., carbon arc welding, plasma arc welding, shielded metal arc welding, submerged arc welding, metal insert gas (MIG) welding or tungsten insert gas (TIG) welding, gas welding, electro-slag welding, laser welding, ultrasonic welding, or the like, based on the description herein.

Each of the plates 111, 112, 113, 114 and 115 and plate parts 116P and 117P of the side walls 116 and 117 may include cooling channels CH, cavities CV, and a rib. Each of the cooling channels CH, the cavities CV, and the rib may extend in the extrusion direction (i.e., the X-axis direction).

The cooling channels CH may provide a path through which a cooling fluid flows. The cooling channels CH may be spaced apart from each other in the Y-axis direction. The cooling channels CH may be arranged in the Y-axis direction.

The cavities CV are empty spaces inside the plates 111, 112, 113, 114 and 115. Due to the formation of the cavities CV, the mass of the plates 111, 112, 113, 114 and 115 may decrease and thus energy density of the battery pack 100 including the pack housing 110 may improve.

The rib may define the cooling channels CH and the cavities CV. The cooling channels CH and the cavities CV may be surrounded by the rib. The rib may maintain airtightness of the cooling channels CH and the cavities CV.

The plate 111 may be at the center of the pack housing 110. The plate 111 may include a center beam CB. The center beam CB may protrude from a mounting surface 111M of the plate 111. The center beam CB may extend in the X-axis direction. The center beam CB may be formed by the extrusion process, together with the plate 111 or be provided separately from the plate 111 and welded to the mounting surface 111M of the plate 111.

The side wall 116 may include the plate part 116P, a side wall part 116SW, and a wing part 116W. The side wall part 116SW may be substantially perpendicular to the plate part 116P. The wing part 116W may be located outside the side wall part 116SW. The wing part 116W may be spaced apart from the plate part 116P with the side wall part 116SW interposed therebetween. The wing part 116W may include a plurality of coupling holes. The wing part 116W may be used to transfer the pack housing 110 or fix the pack housing 110 (e.g., fix the pack housing 110 to a vehicle or another battery tray).

The side wall 117 may include the plate part 117P, a side wall part 117SW, and a wing part 117W. The side wall part 117SW may be substantially perpendicular to the plate part 117P. The wing part 117W may be located outside the side wall part 117SW. The wing part 117W may be spaced apart from the plate part 117P with the side wall part 117SW interposed therebetween. The wing part 117W may include a plurality of coupling holes. The wing part 117W may be used to transfer the pack housing 110 or fix the pack housing 110 (e.g., fix the pack housing 110 to a vehicle or another battery tray).

The side wall 117 may be spaced apart from the side wall 116 with the plates 111, 112, 113, 114 and 115 interposed therebetween. The plate parts 116P and 117P may form a base plate of the pack housing 110, together with the plate 111, 112, 113, 114 and 115.

The plates 111, 112, 113, 114 and 115 and the plate parts 116P and 117P may form a base plate of the pack housing 110. The mounting surface 110M may include mounting surfaces 111M, 112M, 113M, 114M, 115M, 116M and 117M of the plates 111, 112, 113, 114 and 115 and the plate parts 116P and 117P. The mounting surfaces 111M, 112M, 113M, 114M, 115M, 116M and 117M of the plates 111, 112, 113, 114 and 115 and the plate parts 116P and 117P may form the mounting surface 110M of the pack housing 110.

A bottom surface 110B may be opposite to the mounting surface 110M. The bottom surface 110B may be substantially parallel to the mounting surface 110M. The bottom surface 110B may include bottom surfaces 111B, 112B, 113B, 114B, 115B, 116B and 117B of the plates 111, 112, 113, 114 and 115 and the plate parts 116P and 117P. The bottom surfaces 111B, 112B, 113B, 114B, 115B, 116B and 117B of the plates 111, 112, 113, 114 and 115 and the plate parts 116P and 117P may form the bottom surface 110B of the pack housing 110.

The plurality of battery cell assemblies 121, 122, 123, 124, 125 and 126 may be on the plates 111, 112, 113, 114 and 115 and the plate parts 116P and 117P of the pack housing 110. The plates 111, 112, 113, 114 and 115 and the plate parts 116P and 117P may support the plurality of battery cell assemblies 121, 122, 123, 124, 125 and 126. The side walls 116, 117, 118 and 119 may horizontally surround the plurality of battery cell assemblies 121, 122, 123, 124, 125 and 126. The side walls 116, 117, 118 and 119 may protect the plurality of battery cell assemblies 121, 122, 123, 124, 125 and 126.

For example, the battery pack 100 may be of a moduleless type, and each of the plurality of battery cell assemblies 121, 122, 123, 124, 125 and 126 may not include a module frame. As another example, the battery pack 100 may be of a module type, and each of the plurality of battery cell assemblies 121, 122, 123, 124, 125 and 126 may include a module frame.

Each of the plurality of battery cell assemblies 121, 122, 123, 124, 125 and 126 may include a plurality of banks connected to each other in series. Each of the plurality of banks may include one or more battery cells connected in parallel. The number of banks connected in series and the number of battery cells connected in parallel may be determined according to a voltage and a current to be output from each of the plurality of battery cell assemblies 120.

The battery cells are basic units of a lithium ion battery, i.e., a secondary battery. Each of the battery cells includes an electrode assembly, an electrolyte, and a case. Each of the battery cells may be a cylindrical battery cell, a prismatic battery cell, or a pouch type battery cell. An electrode assembly of the cylindrical battery cell is embedded in a cylindrical metal can. An electrode assembly of the prismatic battery cell is embedded in a prismatic metal can. An electrode assembly of the pouch type battery cell is embedded in a pouch case including an aluminum laminate sheet.

The electrode assembly may include a positive electrode, a negative electrode, and a separator between the positive electrode and the negative electrode. The electrode assembly may be a jelly-roll type electrode assembly or a stack type electrode assembly. The jelly-roll type electrode assembly may include a structure in which a positive electrode, a negative electrode, and a separator between the positive and negative electrodes are wound together. The stack type electrode assembly may include a plurality of positive electrodes and a plurality of negative electrodes that are sequentially stacked, and a plurality of separators therebetween.

The battery cell assemblies 121 and 125 may be spaced apart from each other in the X-axis direction. The battery cell assembly 123 may be interposed between the battery cell assemblies 121 and 125. The battery cell assemblies 122 and 126 may be spaced apart from each other in the X-axis direction. The battery cell assembly 124 may be interposed between the battery cell assemblies 122 and 126. The battery cell assemblies 121, 123 and 125 may be spaced apart from the battery cell assemblies 122, 124 and 126 in the Y-axis direction.

Therefore, an array of the plurality of battery cell assemblies 121, 122, 123, 124, 125 and 126 may be a 3x 2 array. Technicians of ordinary skill in the art will be able to easily derive the plurality of battery cell assemblies 121, 122, 123, 124, 125 and 126 arranged in an MxN array (here, M and N are each an integer of 2 or more), based on the above description.

The center beam CB may be interposed between the battery cell assemblies 121, 123 and 125 and the battery cell assemblies 122, 124 and 126. The center beam CB may isolate the battery cell assemblies 121, 123 and 125 and the battery cell assemblies 122, 124 and 126 in the Y-axis direction.

The cross beams 130 may be interposed between the battery cell assembly 121 and the side wall 118, between the battery cell assemblies 121 and 125, between the battery cell assemblies 123 and 125, between the battery cell assembly 123 and the side wall 119, between the battery cell assembly 122 and the side wall 118, between the battery cell assemblies 122 and 126, between the battery cell assemblies 124 and 126, and between the battery cell assembly 124 and the side wall 119.

The arrangement of the center beam CB and the plurality of battery cell assemblies 121, 122, 123, 124, 125 and 126 illustrated in FIG. 1 is a non-limiting example and does not limit the technical idea of the present invention in any sense. A battery pack that includes various numbers and arrangements of a center beam, cross-beams, and battery cell assemblies will be easily derived by technicians of ordinary skill in the art based on the above description.

The exhaust devices 141 and 142 may be installed on the side wall 118. The exhaust devices 141 and 142 may be coupled to the side wall 118. The side wall 118 may include exhaust holes connected to the exhaust devices 141 and 142. The exhaust devices 143 and 144 may be installed on the side wall 119. The exhaust devices 143 and 144 may be coupled to the side wall 119. The side wall 119 may include exhaust holes connected to the exhaust devices 143 and 144. Each of the exhaust devices 141, 142, 143 and 144 may be configured to discharge a high-temperature gas from the inside of the battery pack 100 to the outside to delay thermal propagation, when neighboring battery cell assemblies among the plurality of battery cell assemblies 121, 122, 123 and 124 are in a thermal runaway state.

Here, the thermal runaway state of each of the plurality of battery cell assemblies 121, 122, 123 and 124 is a state in which a temperature change of each of the plurality of battery cell assemblies 121, 122, 123 and 124 accelerates the temperature change, and is an uncontrollable positive feedback. The temperature of the plurality of battery cell assemblies 121, 122, 123 and 124 that are in the thermal runaway state sharply increases, and a large amount of a high-pressure gas and combustion debris are discharged.

The cross beams 130 and the side walls 118 and 119 may provide a space for mounting electronic components. According to example embodiments, the forced exhaust motors 151 and 152 may be interposed between the cross beams 130 and the side wall 118. According to example embodiments, the forced exhaust motors 153 and 154 may be interposed between the cross beams 130 and the side wall 119. According to example embodiments, the BMS 160 may be interposed between the cross beams 130 and the side wall 118.

The forced exhaust motor 151 may be configured to open the exhaust device 141. The forced exhaust motor 152 may be configured to open the exhaust device 142. The forced exhaust motor 153 may be configured to open the exhaust device 143. The forced exhaust motor 154 may be configured to open the exhaust device 144. The forced exhaust motors 151, 152, 153 and 154 may be controlled by the BMS 160.

The BMS 160 may be configured to monitor, balance, and control the battery pack 100. The monitoring of the battery pack 100 may include measuring voltages and currents of certain nodes inside the plurality of battery cell assemblies 121, 122, 123, 124, 125 and 126, and measuring temperatures at set positions inside the pack housing 110. The battery pack 100 may include measuring devices for measuring a voltage, a current, and temperature as described above.

The balancing of the battery pack 100 is an operation of reducing a deviation between the plurality of battery cell assemblies 121, 122, 123, 124, 125 and 126. The controlling of the battery pack 100 includes preventing overcharging, over-discharging, and overcurrent. Through monitoring, balancing, and controlling, the battery pack 100 may be operated under optimal conditions, thereby preventing a decrease in the lifespan of each of the plurality of battery cell assemblies 121, 122, 123, 124, 125 and 126.

The battery pack 100 may further include additional electronic components such as a cooling device, a power relay assembly (PRA), and a safety plug. The cooling device may include a cooling fan. The cooling fan may circulate air in the battery pack 100 to prevent overheating of each of the plurality of battery cell assemblies 121, 122, 123, 124, 125 and 126. The PRA may be configured to supply or cut off power from a high-voltage battery to an external load (e.g., a motor of a vehicle). The PRA may cut off power supply to an external load (e.g., a motor of a vehicle) to protect the plurality of battery cell assemblies 121, 122, 123, 124, 125 and 126 and the external load, when an abnormal voltage such as a voltage surge occurs.

The battery pack 100 may further include a plurality of bus bars configured to electrically connect the plurality of battery cell assemblies 121, 122, 123, 124, 125 and 126. The plurality of battery cell assemblies 121, 122, 123, 124, 125 and 126 may be connected in series by the plurality of bus bars. Accordingly, the battery pack 100 may be configured to output a high voltage to an external load (e.g., a motor of a vehicle).

The battery pack 100 may further include a lead plate coupled to the side walls 116, 117, 118 and 119. The lead plate may cover elements, such as the battery cell assemblies 120 and electronic components, in the battery pack 100. The lead plate may be fixed to the battery pack 100 by a mechanical coupling means such as a fastening member.

### (Second Embodiment)

FIG. 3 is a flowchart of an operation of a battery pack 100 according to other example embodiments.

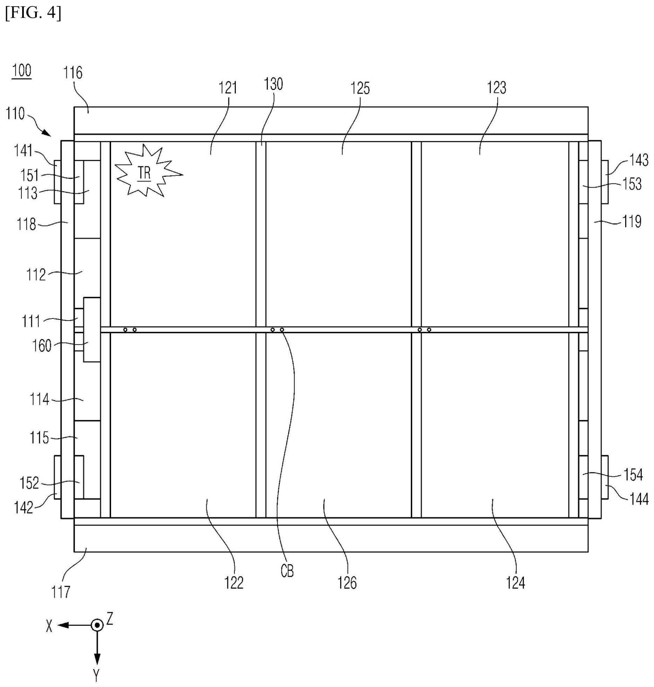

FIG. 4 is a plan view of the battery pack 100 for describing an operation of the battery pack 100 according to example embodiments.

Referring to FIGS. 3 and 4, in P110, a thermal runaway event TR may be sensed. The thermal runaway event TR may be sensed by a BMS 160. According to example embodiments, the BMS 160 may be configured to determine whether the thermal runaway event TR occurs and a location of the thermal runaway event TR, based on a temperature sensed by a temperature sensor. According to example embodiments, the BMS 160 may be configured to determine whether the thermal runaway event TR occurs and the location of the thermal runaway event TR, based on pressure sensed by a pressure sensor. According to example embodiments, the BMS 160 may be configured to determine whether the thermal runaway event TR occurs and the location of the thermal runaway event TR, based on an atmosphere inside the battery pack 100 sensed by a gas sensor.

Next, in P120, forced exhaust motors 151, 152, 153 and 154 may be operated based on the location of the thermal runaway event TR. The BMS 160 may be configured to generate a signal for operating the forced exhaust motors 151, 152, 153 and 154 based on the location of the thermal runaway event TR.

In order to open an exhaust device close to the location of the thermal runaway event TR among a plurality of exhaust devices 141, 142, 143 and 144, the BMS may be configured to operate a forced exhaust motor corresponding to the exhaust device among the forced exhaust motors 151, 152, 153 and 154. As illustrated in FIG. 4, when the thermal runaway event TR occurs in a battery cell assembly 121, the BMS 160 may be configured to generate a signal for operating the forced exhaust motor 151. Accordingly, the forced exhaust motor 151 may open the exhaust device 141 to discharge flames and/or a high-temperature gas from the inside of the battery pack 100 through the exhaust device 141.

Here, it should be understood that the exhaust device 141 among the plurality of exhaust devices 141, 142, 143 and 144 is closest to the location of the thermal runaway event TR, when the exhaust device 141 is close to the location of the thermal runaway event TR.

According to example embodiments, when the thermal runaway event TR occurs in the battery cell assembly 121, the BMS 160 may not operate the forced exhaust motors 152, 153 and 154 and the exhaust devices 142, 143 and 144 may not be opened. Accordingly, a series of thermal runaways of the battery cell assemblies 122, 123, 124, 125 and 126 adjacent to the first battery cell assembly 121 due to the flow of flames and/or a high-temperature gas generated in the first battery cell assembly 121 can be prevented, and the stability of the battery pack 100 can be improved.

In addition, the BMS 160 may be configured to open each of the plurality of exhaust devices 141, 142, 143 and 144 when an aspect of the thermal runaway event meets a critical condition (e.g., when the thermal runaway event occurs in more than half of the plurality of battery cell assemblies 121, 122, 123, 124, 125 and 126).

As another example, when a thermal runaway event occurs in the battery cell assembly 122, the BMS 160 may be configured to generate a signal for operating the forced exhaust motor 152. Accordingly, the forced exhaust motor 152 may open the exhaust device 142. When the thermal runaway event TR occurs in the battery cell assembly 122, the BMS 160 may not operate the forced exhaust motors 151, 153 and 154.

As another example, when a thermal runaway event occurs in the battery cell assembly 123, the BMS 160 may be configured to generate a signal for operating the forced exhaust motor 153. Accordingly, the forced exhaust motor 153 may open the exhaust device 143. When the thermal runaway event TR occurs in the battery cell assembly 123, the BMS 160 may not operate the forced exhaust motors 151, 152 and 154.

As another example, when a thermal runaway event occurs in the battery cell assembly 124, the BMS 160 may be configured to generate a signal for operating the forced exhaust motor 154. Accordingly, the forced exhaust motor 154 may open the exhaust device 144. When the thermal runaway event TR occurs in the battery cell assembly 124, the BMS 160 may not operate the forced exhaust motors 151, 153 and 153.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A battery pack comprising:
a pack housing including plates and a side wall;
first and second battery cell assemblies on the plates;
first and second exhaust devices coupled to the side wall, wherein the first exhaust device is closer to the first battery cell assembly than the second exhaust device, and the second exhaust device is closer to the second battery cell assembly than the first exhaust device;
a first forced exhaust motor configured to open the first exhaust device; and
a second forced exhaust motor configured to open the second exhaust device.

2. The battery pack of claim 1, further comprising a battery management system (BMS) configured to control the first and second forced exhaust motors.

3. The battery pack of claim 2, wherein the BMS is configured to determine whether a thermal runaway event occurs in the pack housing and a location of the thermal runaway event.

4. The battery pack of claim 3, wherein the BMS is configured to control the first and second forced exhaust motors based on the location of the thermal runaway event.

5. The battery pack of claim 2, wherein, when a thermal runaway event occurs in the first battery cell assembly, the BMS is configured to operate the first forced exhaust motor to open the first exhaust device.

6. The battery pack of claim 2, wherein, when a thermal runaway event occurs in the first battery cell assembly, the BMS prevents operation of the second forced exhaust motor.

7. A battery pack comprising:
a pack housing including a plurality of plates and first and second side walls;
first to fourth battery cell assemblies on the base plate;
a battery management system (BMS) configured to monitor the first to fourth battery cell assemblies;
first and second exhaust devices coupled to the first side wall;
third and fourth exhaust devices coupled to the second side wall;
first and second forced exhaust motors between the first and second battery cell assemblies and the first side wall; and
third and fourth forced exhaust motors between the third and fourth battery cell assemblies and the second side wall.

8. The battery pack of claim 7, wherein the first forced exhaust motor is configured to open the first exhaust device,
the second forced exhaust motor is configured to open the second exhaust device,
the third forced exhaust motor is configured to open the third exhaust device, and
the fourth forced exhaust motor is configured to open the fourth exhaust device.

9. The pack housing of claim 7, wherein the BMS is configured to determine a location of a thermal runaway event in the pack housing.

10. The battery pack of claim 9, wherein the BMS is configured to control the first to fourth forced exhaust motors based on the location of the thermal runaway event.

11. The battery pack of claim 10, wherein the BMS is configured to control the first to fourth forced exhaust motors to open an exhaust device closest to the location of the thermal runaway event among the first to fourth exhaust devices.

12. The battery pack of claim 10, wherein the BMS is configured to control the first to fourth forced exhaust motors to open only an exhaust device closest to the location of the thermal runaway event among the first to fourth exhaust devices.
